# EUROPEAN PATENT SPECIFICATION

(11) **EP 0 859 154 B1**
(45) Date of publication and mention of the grant of the patent: **20.11.2002**
(21) Application number: 98200309.7
(22) Date of filing: 03.02.1998
(51) Int. Cl.: F04C 27/00, F16J 15/00

(54) **Device for sealing a rotor shaft and screw-type compressor provided with such a device**
Schraubenverdichter mit Wellenabdichtung
Compresseur rotatif à vis comprenant un dispositif d'étanchéité d'arbre

(30) Priority: 12.02.1997 BE 9700127
(43) Date of publication of application: 19.08.1998
(73) Proprietor: ATLAS COPCO AIRPOWER N.V., 2610 Wilrijk (BE)
(72) Inventor: Ernens, Philippe, 4880 Aubel (BE)
(74) Representative: Donné, Eddy

(56) References cited:
- WO-A-94/15100
- DE-A- 2 740 161
- DE-A- 3 616 689
- US-A- 4 781 553

## Description

The present invention concerns a device for sealing a rotor shaft which is supported on a bearing erected in the housing of an appliance for compressing or expanding a fluid, in particular a compressor or a tube expander of the type containing a housing and at least one rotor mounted therein, whereby the sealing device is situated between the rotor and the bearing around said rotor shaft and contains at least two blank contact or frictionless seals.

It is clear that a leak in the rotor shaft reduces the efficiency of the appliance, but in some cases lubricant of the bearings, usually oil, ending up in the fluid of the appliance or fluid of the appliance ending up in the lubricant of the bearing represents an even greater disadvantage.

This is for example the case with compressors in which the bearings are lubricated with oil if oil-free compressed air is required.

With liquid-injected compressors, a lubricant is sprayed on the rotors which, in order to obtain such oil-free compressed gas, is not oil but for example water. Moreover, this lubricant may not get into contact with the bearings or the oil for lubricating these bearings.

That is why, among others in compressors, devices for sealing a rotor shaft are applied which consist of several seals in order to guarantee an optimal sealing between a rotor and the bearing of the rotor shaft, both when the rotor is at rest and when it is rotating.

A screw-type compressor is described in WO 94/15100 which is equipped with devices for sealing the rotor shafts, whereby most devices consist of three blank contact seals with a ring-shaped chamber between the first and the second seal as of the rotor connecting to an output and a ring-shaped chamber between the second and the third seal onto which a compressed-air line is connected.

However, this known sealing device does not provide a perfect sealing.

US-A-4.781.553 discloses a device for sealing a rotor shaft, which shaft is supported on a bearing erected in the housing of a vacuum pump. The device for sealing comprises between the bearing and the rotor successively a frictionless labyrinth seal, a seal constituted of two seal rings and another seal constituted of two seal rings. A shaft seal portion of the middle seal is in communication with the tooth space portion of the rotor.

The invention aims a device for sealing a rotor shaft with a relatively simple and compact design and which is inexpensive, but which most of all provides a good sealing, also in case of large pressure differences and both when the rotor shaft is at rest or when it is rotating.

This aim is reached according to the invention in that the sealing device successively contains a first blank contact seal between the rotor and the bearing; a double, reverse lip seal with two lips, partly directed towards one another and partly directed towards said rotor shaft with their back sides, and with an entry for fluid under pressure opening between these lips, whereby these lips, depending on the pressure between them, are connected to the rotor shaft or are lifted from the rotor shaft; and a second blank contact seal.

A reverse lip seal in which the unloaded lip elastically connects to the rotor shaft but upon which a larger total pressure is exerted on the back side by the fluid from the compressor during the rotation of the rotor shaft than on the other side, so that the lip is lifted, is described in DE-C-3.616.689.

As the lip is lifted, the friction of the lip against the rotor shaft is eliminated. The lip will then expressly allow for a restricted leak of fluid under pressure.

So, this is the reverse of a normal lip seal whereby the pressure of the compressor is exerted on the front side and whereby the lip is pressed more strongly against the rotor shaft as the rotor shaft begins to turn faster and the pressure in the compressor increases, which results in greater wear.

In a compressor, this fluid preferably comes from the compressor itself and the above-mentioned entry for fluid under pressure is then connected to the high-pressure side of the compressor or an outlet thereof, for example a separator connected to the compressor.

Each of the blank contact seals can be a labyrinth seal or a visco seal, for example a spiral seal.

The sealing device can be situated around the rotor shaft on the high-pressure side of the rotor, in which case it may have an outlet in the housing between the first blank contact seal and the double, reverse lip seal for discharging fluid coming from around the rotor and leaking through the first seal.

The sealing device can be situated around the rotor shaft on the low-pressure side of the rotor, in which case it may have an entry in the housing between the first blank contact seal and the double, reverse lip seal for supplying fluid which is identical to or compatible with the lubricant injected in the housing.

The device may have an output for the lubricant of the bearing between the third seal and the bearing in the housing, whereas it may have a connection to the atmosphere between the lip seal and the third seal.

The invention also concerns a screw-type compressor containing two rotors in the shape of screws having a rotor shaft on both ends which is bearing-mounted in the housing and, most of all such a screw-type compressor in which water or any other lubricant except oil is sprayed on the rotors, characterized in that it contains at least a device for sealing a rotor shaft according to any of the preceding embodiments.

In order to better explain the characteristics of the invention, the following preferred embodiment of a screw-type compressor provided with devices for sealing the rotor shaft according to the invention is described as an example only without being limitative in any way, with reference to the accompanying drawings, in which:
figure 1 schematically represents a section of a screw-type compressor according to the invention;
figure 2 shows the part which is indicated by F2 in figure 1 to a larger scale;
figure 3 shows the part which is indicated by F3 in figure 1 to a larger scale.

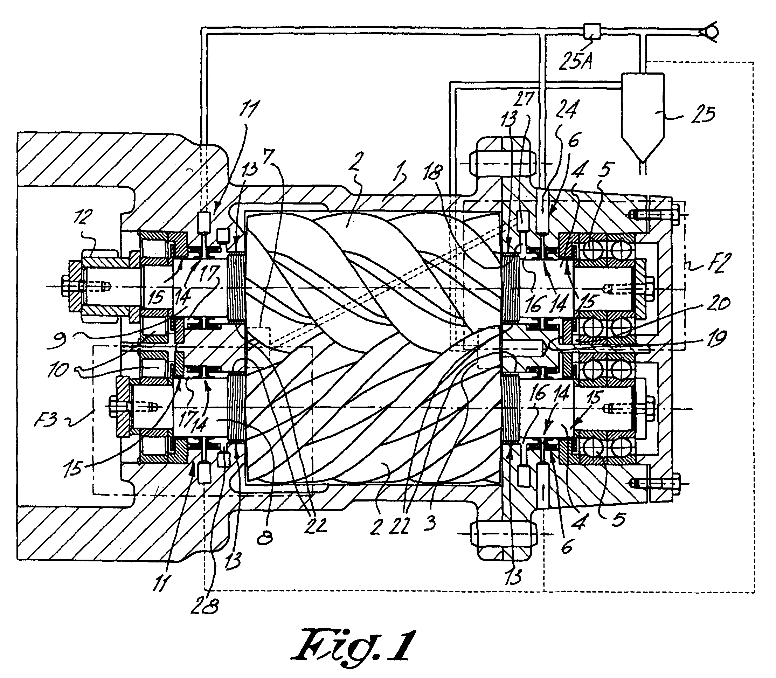

Figure 1 represents a screw-type compressor with water injection which mainly consists of a housing 1 in which two cooperating helical rotors 2 are bearing-mounted.

In front of this bearing, the two rotors 2 are each provided with an axially directed rotor shaft 4 which is bearing-mounted in a double ball bearing 5 in the housing 1 on the high-pressure side of the rotors 2, i.e. on the side of the compressor outlet 3.

Between the rotor 2 and the ball bearing 5, a sealing device 6 is provided around the rotor shaft 4.

On the low-pressure side of the rotors 2 and thus on the side of the compressor inlet 7, each rotor 2 is also provided with an axial rotor shaft 8 or 9, whereby these rotor shafts 8 and 9 are bearing-mounted in a roller bearing 10 provided in the housing 1.

Between a rotor 2 and a roller bearing 10, the rotor shaft 8 or 9 is surrounded by a sealing device 11.

The rotor shaft 9 is slightly longer than the rotor shaft 8 and has a gear wheel 12 on its end which protrudes outside the roller bearing 10 which is part of a gear wheel transmission which is not represented in the figures and which is erected in a gearcase formed by a part of the housing 1 and connected to a driving motor.

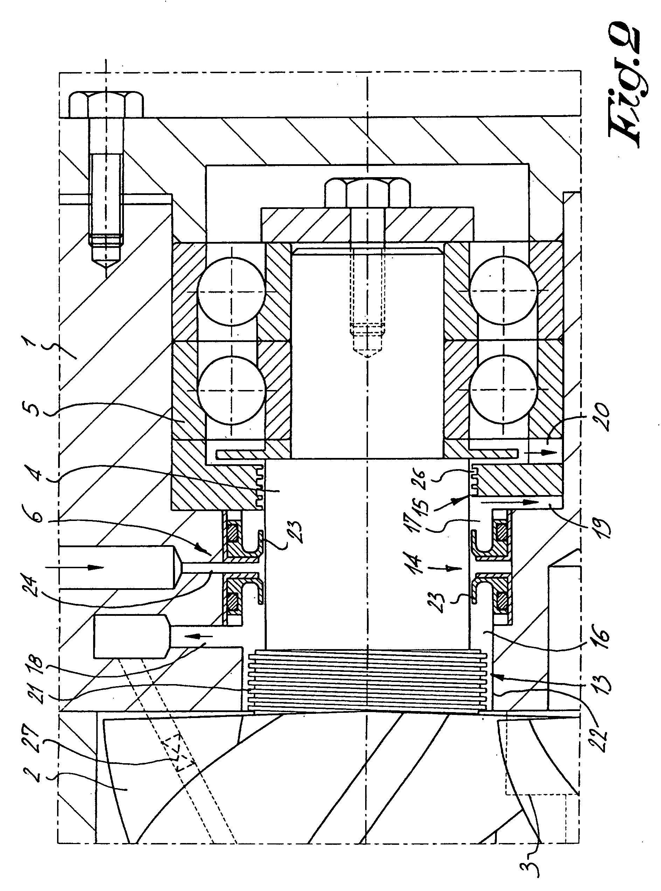

Each device 6 for providing a sealing around a rotor shaft 4 contains, as is represented in detail in figure 2, three seals 13, 14 and 15 with ring-shaped chambers 16 and 17 in between them onto which an outlet 18 and a connection 19 to the atmosphere are respectively connected, whereas a third outlet 20 is connected to the ball bearing 5 on this third seal 15.

The seal 13 on the side of the rotor 2 is a blank contact dynamic seal which is formed, in the example represented, of a spiral seal and consists of a helical thread 21 which is provided on the outside of the rotor shaft 4 and reaches almost up to the wall of the shaft opening 22 in the housing 1. The screw direction of this thread 21 is such that the thread 21, in the normal sense of rotation of the rotor shaft 4, carries fluid to the rotor 2.

The outlet 18 is an outlet for injected fluid, namely water, and air, and it consists of a duct which connects the chamber 16 around the rotor shaft 4 to the compressor inlet 7.

The connection 19 is a duct which provides a connection between the chamber 17 around the rotor shaft 4 and the atmosphere.

The lip seal 14 which is situated between these two chambers 16 and 17 is a double, reverse lip seal containing two lips 23 and an entry 24 for compressed air opening between said two lips 23.

In the shaft opening 22, these two lips 23 are partly directed towards one another and partly directed towards the rotor shaft 4 with their backs. When resting, the flexible ends of these lips 23 are connected to the rotor shaft 4 with their backs.

The front sides of the lips 23 open into the chambers 16 and 17 respectively, whereas the entry 24 for compressed air is a duct which opens into the space between the two lips 23 on the one hand and which is connected to a separator 25 connected to the compressor outlet 3 via a pressure reducing valve 25A on the other hand. This barrier air has a light excess pressure which may be for example 1 bar.

The lips 23 are made of elastic, deformable material such as rubber and are fixed in a support, such that the bending of the above-mentioned flexible end is not hindered.

The third seal 15 is a dynamic blank contact seal, and in the example shown it is a spiral seal consisting of a helical groove 26 provided around the rotor shaft 4 and whose screw direction is opposite to the screw direction of the thread 21, namely such that when the rotor shaft 4 rotates in the normal direction, fluid is pressed back to the ball bearing 10.

The working of the sealing device 6 is as follows.

Under normal working conditions of the compressor, there is a large pressure on the end of each rotor shaft 4 connected to the rotor 2, so that lubricant injected on this rotor 2, i.e. water, will leak under pressure via the rotor shaft 4.

Thanks to the blank contact seal 13, the leaking water will be largely carried back to the rotor 2. What remains of the leak flows back to the compressor inlet 7 via the outlet 18.

The double lip seal 14 provides for the actual separation of the water and the oil with which the ball bearing 5 is lubricated.

The barrier air coming from the separator 25 and which is supplied between the lips 23 via the entry 24 has a larger pressure than the pressure of the oil and the pressure of the water, as a result of which the flexible ends of the lips 23 are lifted and thus no longer make any contact with the rotor shaft 4. On the side of the ball bearing 5, due to the connection 19 of the chamber 17 with the atmosphere, the pressure is practically equal to this atmospheric pressure.

As a result, there is no friction of the lips 23 against the rotor shaft 4, but a small leak of barrier air is created.
This leaking barrier air is partly eliminated via the outlet 18 to the compressor inlet 7 and partly via the outlet 19 to the atmosphere.

On the side of the ball bearing 5 of the lip seal 14, the atmospheric pressure prevails as the chamber 17 is in connection with the atmosphere via the outlet 19. The other side of the lip seal 14 is connected to the compressor inlet 7, where the atmospheric pressure may also prevail.

The third seal 15 makes sure that oil leaking from the ball bearing 5 via the rotor shaft 4 is carried back to this ball bearing 5.

Oil which might possibly get passed the seal 15, is in any case stopped by the leaking compressed air at the lip seal 14, just as water which might get passed the seal 13.

When the compressor is idle, the pressure in the separator 25 is practically equal to the atmospheric pressure, and the excess pressure of the barrier air falls out as well. The excess pressure of this compressed air between the lips 23 falls out, as a result of which these lips 23 are connected to the rotor shaft 4, so that the double, reverse lip seal 14 works statically as a conventional reverse lip seal.

When the compressor is unloaded, a large underpressure is created at the compressor inlet 7. In order to prevent this underpressure to be transmitted via the outlet 18 up to the device 6, a seal 27 must be provided in this outlet 18 which is closed at zero load of the compressor.

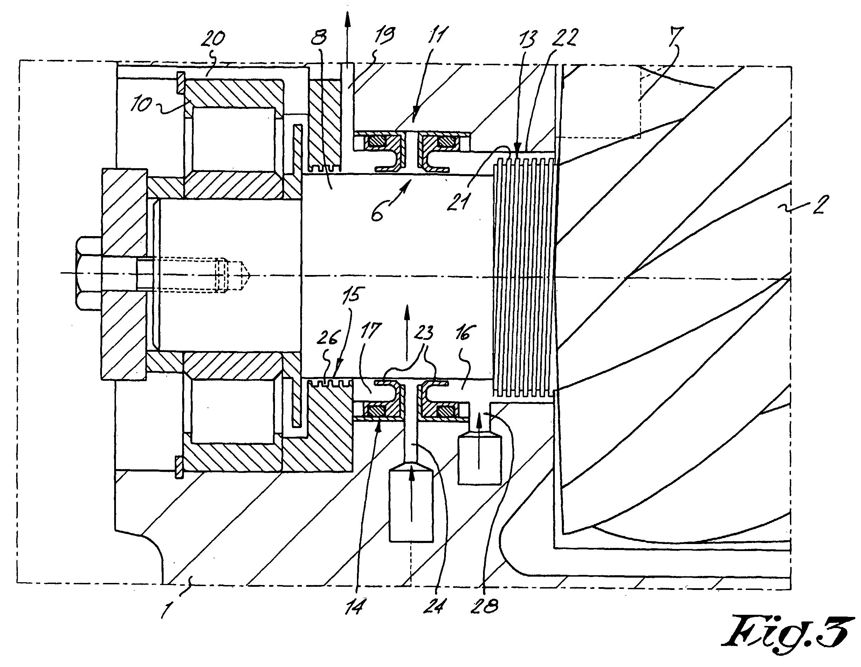

The device 11 for providing a sealing around the rotor shafts 8 and 9, which is represented in detail in figure 3, only differs from the above-described sealing device 6 in that the outlet 18 for water which is connected to the chamber 16 between the sealings 13 and 14 is replaced by an inlet 28 for water and is thus connected to a water source under a small excess pressure of for example 0.1 bar in relation to the pressure in the compressor inlet 7.

The working of this sealing device 11 is analogous to the working of the sealing device 6, with this difference that no water will leak from the side of the rotor 2 and that, because of the blank contact seal 13, water which is supplied via the inlet 28 is carried to the rotor 2 under a light excess pressure.

The water which is supplied under a light excess pressure via the inlet 28 does not have any influence whatsoever on the working of the seal 14, since the pressure of the water is considerably lower than the pressure of the barrier air supplied to the seal 14.

The above-described sealing devices 6 and 11 provide an excellent sealing and a perfect separation between the lubricant of the rotors 2 and that of the bearings 5 and 10.

In these sealing devices 6 and 11, other blank contact sealings than those described above can be used, such as other visco sealings or labyrinth sealings.

Also another lubricant than water may be injected in the compressor.

The entry 24 of the sealings 14 does not necessarily need to be connected to a source of barrier air under pressure either. Instead of barrier air, other fluids under pressure may be used.

The sealing devices 6 or 11 can also be applied to other types of compressors and even to other appliances for compressing or expanding fluids, such as tube expanders and pumps.

The present invention is by no means limited to the above-described embodiments represented in the accompanying drawings; on the contrary, such a sealing device and such a screw-type compressor can be made in all sorts of variants while still remaining within the scope of the invention.

## Claims

1. A sealing arrangement including a sealing device and a rotor shaft (4-8-9) which is supported on a bearing (5-10) erected in the housing (1) of an appliance for compressing or expanding a fluid containing, apart from the housing (1), at least one rotor (2) mounted therein, whereby the sealing device is situated between the rotor (2) and the bearing (5-10) around said rotor shaft (5-8-9) and contains at least two blank contact or frictionless seals (13-15), **characterized in that** this sealing device successively contains a first blank contact seal (13) between the rotor (2) and the bearing (4-8-9); a double, reverse lip seal (14) with two lips (23), partly directed towards one another and partly directed towards said rotor shaft (4-8-9) with their back sides, and with an entry (24) for fluid under pressure opening between these lips (23), whereby these lips (23), depending on the pressure between them, are connected to the rotor shaft (4-8-9) or are lifted from the rotor shaft (4-8-9); and a second blank contact seal (15).

2. Sealing device according to claim 1, **characterized in that** it is mounted around a rotor shaft (4-8-9) of a compressor and **in that** the entry (24) for fluid under pressure is connected to the high-pressure side of the compressor or to a line connected to the outlet thereof via a pressure reducing device (25A).

3. Sealing device according to any of the preceding claims, **characterized in that** at least one of the blank contact seals (13-15) is a labyrinth seal or a visco seal, for example a spiral seal.

4. Sealing device according to any of the preceding claims, **characterized in that** it is situated around the rotor shaft (4) on the high-pressure side of the rotor (2) and **in that** it has an outlet (18) in the housing (1) between the first blank contact seal (13) and the double, reverse lip seal (14) for discharging fluid leaking through the first seal (13) from around the rotor (2).

5. Sealing device according to any of claims 1 to 3, **characterized in that** it is situated around the rotor shaft (8-9) on the low-pressure side of the rotor (2) and **in that** it has an inlet (28) in the housing (1) for supplying fluid between the first blank contact seal (13) and the double, reverse lip seal (14).

6. Sealing device according to any of the preceding claims, **characterized in that** it has a connection (19) to the atmosphere between the lip seal (14) and the third seal (15).

7. Sealing device according to any of the preceding claims, **characterized in that** it has an outlet (20) for lubricant of the bearing (5-10) in the housing (1) between the third seal (15) and the bearing (5-10).

8. Sealing device according to any of claims 4 to 6, **characterized in that** it has a ring-shaped chamber (16-17) around the rotor shaft (4-8-9) between at least two of the seals (13-14-15) onto which an outlet (18), an inlet (28) or a connection (19) to the atmosphere are connected.

9. Screw-type compressor containing two helical rotors (2) which have a rotor shaft (4-8-9) on both ends which is bearing-mounted in a housing (1), **characterized in that** it contains at least one device for sealing a rotor shaft (4-8-9) according to any of the preceding claims.

10. Screw-type compressor according to claim 9, **characterized in that** the device for sealing at least one of the rotor shafts (8-9) situated on the high-pressure side or the outlet side contains an outlet (18) between the first seal (13) and the lip seal (14) which is connected to the compressor inlet (7).

11. Screw-type compressor according to claim 9 or 10, **characterized in that** the device for sealing at least one of the rotor shafts (4) situated on the low-pressure side or the inlet side contains an inlet (28) between the first seal (13) and the lip seal (14) which is connected to a fluid source.

12. Screw-type compressor according to any of claims 10 to 11, **characterized in that** it is a liquid-injected compressor.

## Patentansprüche

1. Eine Dichtungsanordnung einschließlich einer Dichtungsvorrichtung und einer Rotorwelle (4-8-9), die auf einem im Gehäuse (1) eines Geräts zum Komprimieren oder Expandieren eines Fluids aufgestellten Lager (5-10) aufliegt, umfassend, außer dem Gehäuse (1), zumindest einen darin montierten Rotor (2), wobei die Dichtungsvorrichtung sich zwischen dem Rotor (2) und dem Lager (5-10) um besagte Rotorwelle (5-8-9) befindet und zumindest zwei kontaktfreie oder reibungsfreie Dichtungen (13-15) enthält, **dadurch gekennzeichnet, dass** diese Dichtungsvorrichtung aufeinanderfolgend eine erste kontaktfreie Dichtung (13) zwischen dem Rotor (2) und dem Lager (4-8-9) enthält; eine doppelte, umgekehrte Lippendichtung (14) mit zwei Lippen (23), die mit ihrer Rückseite teils zueinander und teils zu der besagten Rotorwelle (4-8-9) gerichtet sind, und mit einem Einlass (24) für Fluid unter Druck, der zwischen diesen Lippen (23) mündet, wobei diese Lippen (23), abhängig vom Druck zwischen ihnen, an die Rotorwelle (4-8-9) anschließen oder von der Rotorwelle (4-8-9) abgehoben werden; und eine zweite kontaktfreie Dichtung (15).

2. Dichtungsvorrichtung gemäß Anspruch 1, **dadurch gekennzeichnet, dass** sie um eine Rotorwelle (4-8-9) eines Kompressors montiert ist und dass der Einlass (24) für Fluid unter Druck mittels einer Druckreduziervorrichtung (25A) mit der Hochdruckseite des Kompressors oder mit einer an dessen Auslass angeschlossenen Leitung in Verbindung steht.

3. Dichtungsvorrichtung gemäß einem der vorgenannten Ansprüche, **dadurch gekennzeichnet, dass** zumindest eine der kontaktfreien Dichtungen (13-15) eine Labyrinthdichtung oder eine Viskodichtung, beispielsweise eine Spiraldichtung, ist.

4. Dichtungsvorrichtung gemäß einem der vorgenannten Ansprüche, **dadurch gekennzeichnet, dass** sie an der Hochdruckseite des Rotors (2) um die Rotorwelle (4) herum angeordnet ist und dass sie zwischen der ersten kontaktfreien Dichtung (13) und der doppelten, umgekehrten Lippendichtung (14) einen Auslass (18) im Gehäuse (1) zur Abfuhr von durch die erste Dichtung (13) um den Rotor (2) herum austretendem Fluid aufweist.

5. Dichtungsvorrichtung gemäß einem der Ansprüche 1 bis 3, **dadurch gekennzeichnet, dass** sie an der Niederdruckseite des Rotors (2) um die Rotorwelle (8-9) herum angeordnet ist und dass sie zwischen der ersten kontaktfreien Dichtung (13) und der doppelten, umgekehrten Lippendichtung (14) einen Einlass (28) im Gehäuse (1) zur Zufuhr von Fluid aufweist.

6. Dichtungsvorrichtung gemäß einem der vorgenannten Ansprüche, **dadurch gekennzeichnet, dass** sie zwischen der Lippendichtung (14) und der dritten Dichtung (15) eine Verbindung (19) zur Atmosphäre aufweist.

7. Dichtungsvorrichtung gemäß einem der vorgenannten Ansprüche, **dadurch gekennzeichnet, dass** sie zwischen der dritten Dichtung (15) und dem Lager (5-10) einen Auslass (20) für Schmiermittel vom Lager (5-10) im Gehäuse (1) aufweist.

8. Dichtungsvorrichtung gemäß einem der Ansprüche 4 bis 6, **dadurch gekennzeichnet, dass** sie zwischen zumindest zwei der Dichtungen (13-14-15) eine ringförmige Kammer (16-17) um die Rotorwelle (4-8-9) aufweist, an die ein Auslass (18), ein Einlass (28) oder eine Verbindung (19) zur Atmosphäre angeschlossen sind.

9. Schraubenkompressor, umfassend zwei Schraubenrotoren (2), die an beiden Enden eine Rotorwelle (4-8-9) aufweisen, die in einem Gehäuse (1) gelagert ist, **dadurch gekennzeichnet, dass** er zumindest eine Vorrichtung zum Abdichten einer Rotorwelle (4-8-9) gemäß einem der vorgenannten Ansprüche aufweist.

10. Schraubenkompressor gemäß Anspruch 9, **dadurch gekennzeichnet, dass** die an der Hochdruckseite oder der Auslassseite befindliche Vorrichtung zum Abdichten zumindest einer der Rotorwellen (8-9) einen Auslass (18) zwischen der ersten Dichtung (13) und der Lippendichtung (14) umfasst, der an den Kompressoreinlass (7) anschließt.

11. Schraubenkompressor gemäß Anspruch 9 oder 10, **dadurch gekennzeichnet, dass** die an der Niederdruckseite oder der Einlassseite befindliche Vorrichtung zum Abdichten zumindest einer der Rotorwellen (4) einen Einlass (28) zwischen der ersten Dichtung (13) und der Lippendichtung (14) umfasst, der an eine Fluidquelle anschließt.

12. Schraubenkompressor gemäß einem der Ansprüche 10 bis 11, **dadurch gekennzeichnet, dass** er ein flüssigkeitsinjizierter Kompressor ist.

## Revendications

1. Arrangement d'étanchéisation englobant un dispositif d'étanchéisation et un arbre de rotor (4 - 8 - 9) qui est supporté sur un palier (5 - 10) monté dans le carter (1) d'un appareil pour comprimer ou dilater un fluide, contenant, en dehors du carter (1), au moins un rotor (2) monté dans ledit carter, par lequel le dispositif d'étanchéisation est situé entre le rotor (2) et le palier (5 - 10) autour dudit arbre de rotor (5 - 8 - 9) et contient au moins deux joints d'étanchéité sans contact ou exempts de friction (13 - 15), **caractérisé en ce que** ce dispositif d'étanchéisation contient successivement un premier joint d'étanchéité sans contact (13) entre le rotor (2) et le palier (4 - 8 - 9) ; un double joint d'étanchéité (14) du type à lèvres inverses, comprenant deux lèvres (23) orientées en partie l'une vers l'autre et orientées en partie en direction dudit arbre de rotor (4 - 8 - 9) avec leurs côtés dorsaux ; et comprenant une entrée (24) pour un fluide sous pression, s'ouvrant entre ces deux lèvres (23), par lequel ces lèvres (23), en fonction de la pression s'exerçant sur elles, sont connectées à l'arbre de rotor (4 - 8 - 9) ou se soulèvent à l'écart de l'arbre de rotor (4 - 8 - 9) ; et un deuxième joint d'étanchéité (15) sans contact.

2. Dispositif d'étanchéisation selon la revendication 1, **caractérisé en ce qu'**il est monté autour d'un arbre de rotor (9 - 8 - 2) d'un compresseur et **en ce que** l'entrée (24) pour le fluide sous pression est connectée au côté haute pression du compresseur ou à un conduit connecté à la sortie dudit compresseur via un dispositif de réduction de la pression (25A).

3. Dispositif d'étanchéisation selon l'une quelconque des revendications précédentes, **caractérisé en ce qu'**au moins un des joints d'étanchéité sans contact (13 - 15) est un joint d'étanchéité en labyrinthe ou un joint d'étanchéité viscoélastique, par exemple un joint d'étanchéité en spirale.

4. Dispositif d'étanchéisation selon l'une quelconque des revendications précédentes, **caractérisé en ce qu'**il est disposé autour de l'arbre de rotor (4) du côté haute pression du rotor (2), et **en ce qu'**il possède une sortie (18) dans le carter (1) entre le premier joint d'étanchéité (13) sans contact et le double joint d'étanchéité du type à lèvres inverses (14) afin d'évacuer le fluide qui fuit à travers le premier joint d'étanchéité (13) à l'écart du rotor (2).

5. Dispositif d'étanchéisation selon l'une quelconque des revendications 1 à 3, **caractérisé en ce qu'**il est situé autour de l'arbre de rotor (8 - 9) du côté basse pression du rotor (2), et **en ce qu'**il possède une entrée (28) dans le carter (1) pour alimenter du fluide entre le premier joint d'étanchéité (13) sans contact et le double joint d'étanchéité du type à lèvres inverses (14).

6. Dispositif d'étanchéisation selon l'une quelconque des revendications précédentes, **caractérisé en ce qu'**il possède un raccord (19) à l'atmosphère entre le joint d'étanchéité à lèvres (14) et le troisième joint d'étanchéité (15).

7. Dispositif d'étanchéisation selon l'une quelconque des revendications précédentes, **caractérisé en ce qu'**il possède une sortie (20) pour le lubrifiant du palier (5 - 10) dans le carter (1) entre le troisième joint d'étanchéité (15) et le palier (5 - 10).

8. Dispositif d'étanchéisation selon l'une quelconque des revendications 4 à 6, **caractérisé en ce qu'**il possède une chambre de forme annulaire (16 - 17) autour de l'arbre de rotor (4 - 8 - 9) entre au moins deux des joints d'étanchéité (13 - 14 - 15), à laquelle est raccordée une sortie (18), une entrée (28) ou un raccord (19) vis-à-vis de l'atmosphère.

9. Compresseur du type à vis contenant deux rotors hélicoïdaux (2) qui possèdent un arbre de rotor (4 - 8 - 9) qui est monté, à ses deux extrémités, sur un palier dans un carter (1), **caractérisé en ce qu'**il contient au moins un dispositif pour l'étanchéisation d'un arbre de rotor (4 - 8 - 9) selon l'une quelconque des revendications précédentes.

10. Compresseur du type à vis selon la revendication 9, **caractérisé en ce que** le dispositif pour l'étanchéisation d'au moins un des arbres de rotor (8 - 9) situé du côté haute pression ou du côté sortie contient une sortie (18) entre le premier joint d'étanchéité (13) et le joint à lèvres (14), qui est reliée à l'entrée (7) du compresseur.

11. Compresseur du type à vis selon la revendication 9 ou 10, **caractérisé en ce que** le dispositif pour l'étanchéisation d'au moins un des arbres de rotor (4) situé du côté basse pression ou du côté entrée contient une entrée (28) entre le premier joint d'étanchéité (13) et le joint à lèvres (14), qui est reliée à une source de fluide.

12. Compresseur du type à vis selon l'une quelconque des revendications 10 à 11, **caractérisé en ce qu'**il s'agit d'un compresseur du type à liquide injecté.
